# EUROPÄISCHE PATENTANMELDUNG

(11) **EP 1 465 352 A2**
(43) Veröffentlichungstag der Anmeldung: **06.10.2004**
(21) Anmeldenummer: 04007766.1
(22) Anmeldetag: 31.03.2004
(51) Int. Cl.: H04B 1/08, H04B 1/18

(54) **Vorrichtung zum Empfang mehrerer funkübertragener Signale**

(30) Priorität: 04.04.2003 DE 10315717
(71) Anmelder: ROBERT BOSCH GMBH, 70442 Stuttgart (DE)
(72) Erfinder: Neutel, Andreas, 31157 Sarstedt (DE); Passoke, Jens, 30539 Hannover (DE)

(57) **Zusammenfassung**

Es wird eine Vorrichtung zum Empfang mehrerer funkübertragener Signale in einem Kraftfahrzeug vorgeschlagen, die aus einer Antenne und mindestens einem Empfangsgerät besteht, wobei zwischen der einen Antenne und dem mindestens einem Empfangsgerät eine einzige Übertragungsleitung vorgesehen ist, über die Signale mindestens zweier verschiedener Rundfunkübertragungsstandards und ein Positionsbestimmungssignal übertragen werden und wobei im Empfangsgerät die zugeführten Signale aufgeteilt werden und jeweiligen Demodulationseinrichtungen zugeführt werden.

## Beschreibung

Die vorliegende Erfindung betrifft eine Vorrichtung zum Empfang mehrerer funkübertragener Signale in einem Kraftfahrzeug, die aus einer Antenne und mindestens einem Empfangsgerät besteht, wobei zwischen der einen Antenne und dem mindestens einen Empfangsgerät eine einzige Übertragungsleitung vorgesehen ist, über die Signale mindestens zweier verschiedener Rundfunkübertragungsstandards und ein Positionsbestimmungssignal übertragen werden und wobei im Empfangsgerät die zugeführten Signale aufgeteilt werden und den jeweiligen Demodulationseinrichtungen zugeführt werden.

### Stand der Technik

Moderne Kraftfahrzeuge verfügen heutzutage über viele Geräte, die funkübertragene Signale empfangen. Hierbei ist beispielsweise der herkömmliche AM- bzw. FM-Rundfunk zu nennen, digitaler Rundfunk, der als DAB-Signal übertragen wird, zu nennen sowie weiterhin Navigationsgeräte vorgesehen, die satellitengestützte Positionsbestimmungssignale, insbesondere GPS-Signale empfangen sowie auch in vermehrtem Umfang Telemetriedienste vorgesehen, die eine Datenübertragung nach außen hin und von außen ermöglichen. Dies macht eine große Anzahl an Antennen am Fahrzeug erforderlich sowie eine dementsprechend große Anzahl an Übertragungsleitungen nötig, die die Antennen mit den jeweiligen Geräten verbinden.

### Kern und Vorteile der Erfindung

Der Kern der vorliegenden Erfindung ist es, eine große Anzahl an Empfangssignalen mit einer einzigen Antenne zu empfangen und diese Signale mittels einer einzigen Übertragungsleitung einem Gerät zuzuführen, in dem die jeweiligen Signale aufgeteilt und weitergeleitet werden. Dies macht nur noch eine Antenne am Kraftfahrzeug erforderlich und reduziert weiterhin die Anzahl an Übertragungsleitungen, die die von der Antenne empfangenen Signale weiterleitet. Erfindungsgemäß wird dieses durch die Merkmale des unabhängigen Anspruchs gelöst. Vorteilhafte Weiterbildungen und Ausgestaltungen ergeben sich aus den Unteransprüchen.

Im Rahmen der vorliegenden Anmeldung werden amplitudenmodulierter Hörfunk (AM) und frequenzmodulierter Hörfunk (FM) als unterschiedliche Übertragungsstandards bezeichnet. Als weitere Übertragungsstandards sind beispielsweise Digital Radio Mondial (DRM), HD-Radio oder Satellite Digital Audio Radio Service (SDARS) denkbar. In diesen Fällen müssten die vorgesehenen Filter derart abgeändert werden, dass die jeweiligen Frequenzbänder empfangbar sind.

Vorteilhaft ist, dass dem Empfangsgerät mittels der Übertragungsleitung drei Rundfunkübertragungsstandards sowie ein Positionsbestimmungssignal zuführbar sind, da moderne Autoradios immer mehr Hörfunkübertragungsstandards verwenden können.

Weiterhin ist es vorteilhaft, dass die Rundfunkübertragungsstandards frequenzmodulierter Hörfunk (FM), amplitudenmodulierter Hörfunk (AM) sowie digitaler Hörfunk, der meist als Digital Audio Broadcast-Signal (DAB) ausgestrahlt wird, sind.

Vorteilhafter Weise ist das Positionsbestimmungssignal ein Global Positioning-Signal (GPS) oder ein Galileo-Signal, das von Navigationssatelliten ausgestrahlt wird.

Weiterhin ist es vorteilhaft, dass der Empfangspfad für das amplitudenmodulierte Signal einen AM-Filter aufweist. Dieser Filter kann insbesondere als eine Serieninduktivität ausgeführt sein.

Weiterhin ist es vorteilhaft, dass der Empfangspfad für das frequenzmodulierte Signal einen FM-Filter aufweist. Dieser FM-Filter kann vorteilhafter Weise als zwei in Serie geschaltete Sperrkreise ausgeführt sein.

Weiterhin ist es vorteilhaft, dass der Empfangspfad für das digitale Hörfunksignal eine Bandsperre für FM- und AM-Signale aufweist. Diese Bandsperre für FM- und AM-Signale kann beispielsweise als ein in Serie geschalteter Sperrkreis ausgeführt sein.

Weiterhin ist es vorteilhaft, dass das Eingangssignal des Positionsbestimmungssignalfilters das Ausgangssignal der Bandsperre für FM- und AM-Signale ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung an Hand von Zeichnungen erläutert. Es zeigen
- Fig. 1: eine schematische Darstellung der erfindungsgemäßen Vorrichtung,
- Fig. 2: eine schematische Darstellung eines ersten Ausführungsbeispieles der erfindungsgemäßen Vorrichtung,
- Fig. 3: eine schematische Darstellung einer zweiten Ausführungsform der erfindungsgemäßen Vorrichtung und
- Fig. 4: eine detaillierte Darstellung der zweiten Ausführungsform der erfindungsgemäßen Vorrichtung.

### Beschreibung von Ausführungsbeispielen

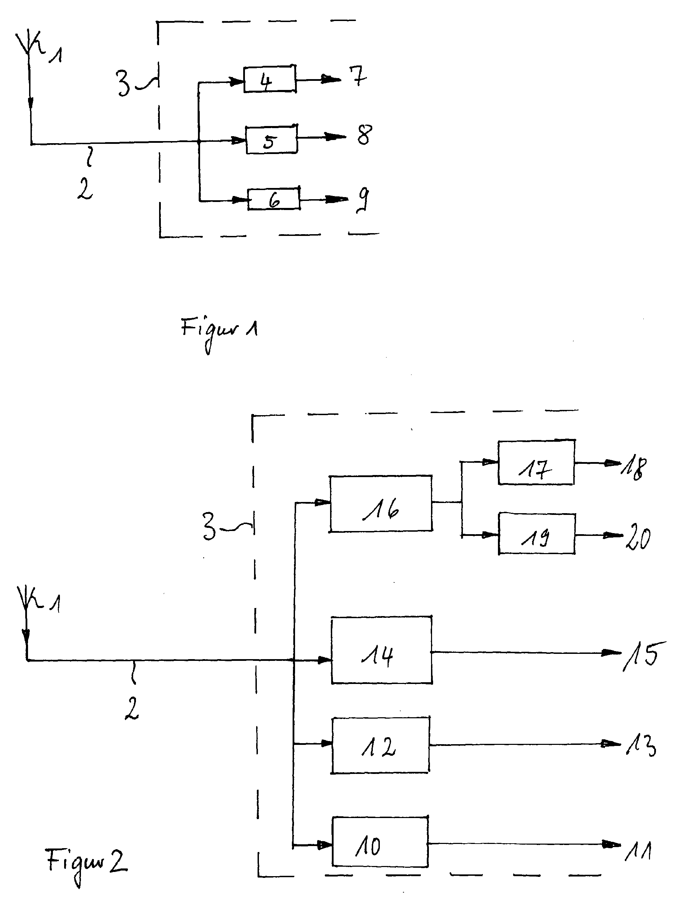

In Fig. 1 ist eine Empfangsantenne 1 dargestellt, die Signale verschiedener Funkübertragungsstandards empfangen kann. Diese Signale werden mittels der Übertragungsleitung 2 einem Empfängergerät 3 zugeführt. Im Empfänger 3 wird das Eingangssignal, das aus den mittels der Antenne 1 empfangenen Signalen besteht, aufgespaltet und verschiedenen weiteren Einrichtungen zugeführt. So wird das Eingangssignal einem Filter 4 für einen ersten Rundfunkübertragungsstandard zugeführt, der das Empfangssignal des ersten Rundfunkübertragungsstandards passieren lässt und damit dieses Signal aus der Vielzahl der überlagerten Empfangssignale der Antenne 1 ausfiltert. Dieses erste Rundfunksignal 7 wird einer nachgeschalteten Verarbeitungsstufe im Empfangsgerät 3 zugeführt. Ebenso ist ein weiteres Filter 5 für einen zweiten Rundfunkübertragungsstandard vorgesehen, das aus der Vielzahl der überlagerten und von der Antenne 1 empfangenen Signale ausfiltert. Dieses zweite Rundfunksignal 8 wird ebenfalls einer weiteren Verarbeitung im Gerät 3 zugeführt. Weiterhin wird aus der Vielzahl der überlagerten Signale, die von der Antenne 1 empfangen werden und über die Übertragungsleitung 2 dem Empfangsgerät 3 zugeführt werden einem Filter 6 für Positionsbestimmungssignale zugeführt, der die Signale des Positionsbestimmungsstandards passieren lässt. Dieses Positionsbestimmungssignal 9 wird einer weiteren Verarbeitung im Empfangsgerät 3 zugeführt oder einem separat vorhandenen Navigationsgerät als Eingangssignal zugeführt.

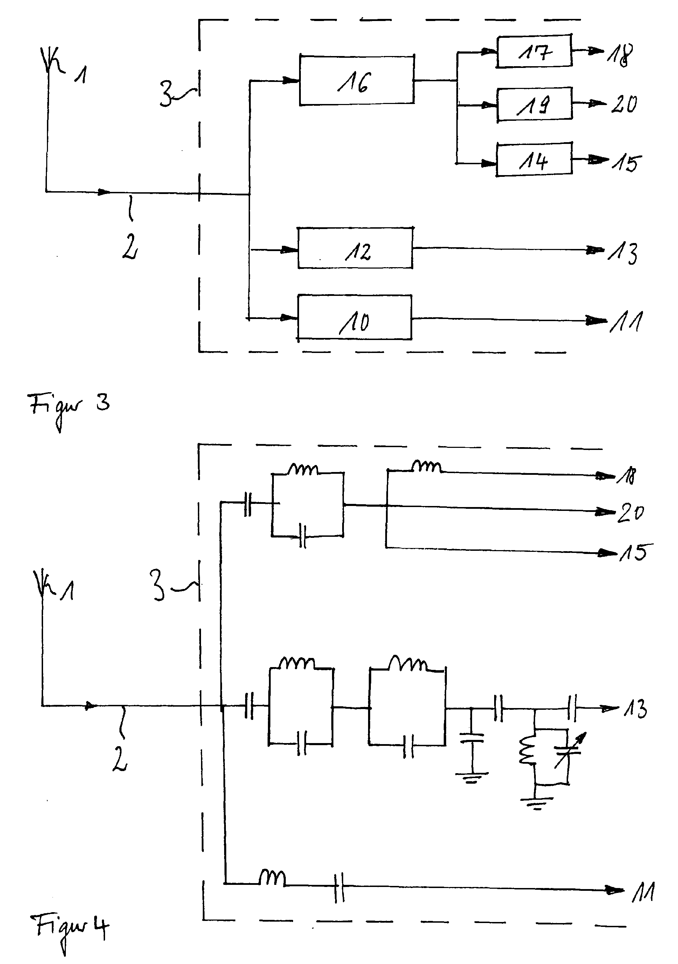

In Fig. 2 ist eine erste Ausführungsform der erfindungsgemäßen Vorrichtung dargestellt. Zu erkennen ist wiederum die Antenne 1, die eine Vielzahl an überlagerten Rundfunkübertragungssignalen empfängt und mittels der Übertragungsleitung 2 dem Empfänger 3 zuführt. In diesem Ausführungsbeispiel wird das Eingangssignal einem AM-Filter 10 zugeführt, das die Empfangssignale für amplitudenmodulierten Hörfunk passieren lässt und einer AM-Vorstufe 11 zuführt, in der das Hörfunkprogramm weiter verarbeitet wird. Weiterhin ist ein FM-Filter 12 vorgesehen, das ebenfalls aus dem Eingangssignal, das dem Empfangsgerät 3 zugeführt wird, das frequenzmodulierte Hörfunksignal filtert und nur dieses passieren lässt und einer FM-Vorstufe 13 zuführt, in der das frequenzmodulierte Hörfunkprogramm weiterverarbeitet wird. Weiterhin wird aus dem Eingangssignal mittels eines Positionsbestimmungssignalfilters 14 ein Positionsbestimmungssignal gefiltert und einem Positionsbestimmungsgerät 15 zugeführt, das das Positionsbestimmungssignal weiter verarbeitet. Hierbei kann vorgesehen sein, dass das Positionsbestimmungssignalfilter 14 so ausgelegt ist, dass GPS-Signale oder Galileo-Signale oder Signale anderer satellitengestützter Positionsbestimmungssysteme passieren lässt. Weiterhin wird das Eingangssignal, das dem Empfangsgerät 3 zugeführt wird, einer AM-/FM-Bandsperre 16 zugeführt, die aus dem Eingangssignal sowohl das frequenzmodulierte Hörfunksignal als auch das amplitudenmodulierte Hörfunksignal ausfiltert und abblockt. Das Ausgangssignal der AM-/FM-Bandsperre 16 beinhaltet Signale für digitalen Hörfunk, die beispielsweise DAB-Signale oder DRM-Signale sind und im Beispiel des DAB-Signals im L-Band und im III-Band übertragen werden. Dementsprechend wird das Ausgangssignal der AM-/FM-Bandsperre 16 sowohl einem DAB-Filter für das L-Band 17 und einem DAB-Filter für das III-Band 19 zugeführt. Diese beiden DAB-Filter 17, 19 lassen lediglich die Signale für den digitalen Hörfunk passieren und leiten die Ausgangssignale einem DAB-Empfänger für das L-Band 18 sowie einem DAB-Empfänger für das III-Band 20 zu.
Wird anstatt des DAB-Standards ein DRM-Signal übertragen, so ist das Filter 16 als reine FM-Bandsperre auszuführen und die Filter 17 und 19 entsprechend den DRM-Frequenzen anzupassen.

In Fig. 3 ist eine weitere Ausführungsform des Empfängerkonzepts dargestellt. Die Antenne 1, die Übertragungsleitung 2, das Empfangsgerät 3 sowie der AM-Empfangszweig 10, 11 und der FM-Empfangszweig 12, 13 sind identisch ausgeführt, wie in Fig. 2 beschrieben. Weiterhin ist eine AM-/FM-Bandsperre 16 nach Fig. 2 vorgesehen. Das Ausgangssignal der AM-/FM-Bandsperre 16 wird einem Filter 17 zugeführt, der das DAB-Signal im L-Band passieren lässt und an einen DAB-Empfänger 18 weiterleitet. Ebenfalls wird das Ausgangssignal des Filters 16 an ein weiteres Filter 19 für das III-Band zugeführt, das das digitale Hörfunkprogramm im III-Band passieren lässt und an eine Verarbeitungseinrichtung 20 eines digitalen Hörfunkempfängers weiterleitet. Das Ausgangssignal der AM-/FM-Bandsperre 16 wird ebenfalls dem Positionsbestimmungssignalfilter 14 zugeführt, das das Signal eines satellitengestützten Navigationssystems passieren lässt und in einem entsprechenden Empfänger 15 weiterverarbeitet wird. Dieses Signal kann beispielsweise ein GPS-Signal oder ein Galileo-Signal sein.

In Fig. 4 ist eine detaillierte Ausführungsform des in Fig. 3 beschriebenen Systems beschrieben. Fig. 4 zeigt hierbei, beispielhaft, wie die einzelnen Filter aufgebaut sein können und die Signale entsprechend aufbereitet werden.

## Patentansprüche

1. Vorrichtung zum Empfang mehrerer funkübertragener Signale in einem Kraftfahrzeug, bestehend aus einer Antenne (1) und mindestens einem Empfangsgerät (3), wobei zwischen der einen Antenne und dem mindestens einem Empfangsgerät eine einzige Übertragungsleitung (2) vorgesehen ist, über die Signale mindestens zweier verschiedener Rundfunkübertragungsstandards ( 11,13,18,20) und ein Positionsbestimmungssignal (15) übertragbar sind, **dadurch gekennzeichnet, dass** im Empfangsgerät (3) die zugeführten Signale aufgeteilt werden und jeweiligen Demodulationseinrichtungen zuführbar sind.

2. Vorrichtung nach Anspruch 1, dadurch gekennnzeichnet, dass dem Empfangsgerät (3) über die Übertragungsleitung (2) drei Rundfunkübertragungsstandards (11,13,18,20) sowie ein Positionsbestimmungssignal (15) zuführbar sind.

3. Vorrichtung nach einem der vorhergehenden Ansprüche, **dadurch gekennzeichnet, dass** die Rundfunkübertragungsstandards frequenzmodulierter Hörfunk (FM)(13), amplitudenmodulierter Hörfunk (AM) (11) und digitaler Hörfunk (DAB) (18,20) sind.

4. Vorrichtung nach einem der vorhergehenden Ansprüche, **dadurch gekennzeichnet, dass** das Positionsbestimmungssignal (15) ein satellitengestütztes GPS-Signal oder GALILEO-Signal ist.

5. Vorrichtung nach einem der vorhergehenden Ansprüche, **dadurch gekennzeichnet, dass** der Empfangspfad für das amplitudenmodulierte Signal einen AM-Filter (10) aufweist.

6. Vorrichtung nach Anspruch 5, **dadurch gekennzeichnet, dass** der AM-Filter (10) als Serieninduktivität ausgeführt ist.

7. Vorrichtung nach einem der vorhergehenden Ansprüche, **dadurch gekennzeichnet, dass** der Empfangspfad für das frequenzmodulierte Signal einen FM-Filter (12) aufweist.

8. Vorrichtung nach Anspruch 7, **dadurch gekennzeichnet, dass** der FM-Filter (12) zwei in Serie geschaltete Sperrkreise aufweist.

9. Vorrichtung nach einem der vorhergehenden Ansprüche, **dadurch gekennzeichnet, dass** der Empfangspfad für das digitale Hörfunksignal eine Bandsperre für FM- und AM-Signale (16) aufweist.

10. Vorrichtung nach Anspruch 9, **dadurch gekennzeichnet dass** die Bandsperre für FM- und AM-Signale (16) als in Serie geschalteter Sperrkreis ausgeführt ist.

11. Vorrichtung nach einem der Ansprüche 1 bis 10, **dadurch gekennzeichnet, dass** das Eingangssignal des Positionsbestimmungssignalfilters (14) das Ausgangssignal der Bandsperre für FM- und AM-Signale (16) ist.

12. Vorrichtung nach einem der Ansprüche 1 bis 11, **dadurch gekennzeichnet, dass** das Eingangssignal des Positionsbestimmungssignalfilters (14) das Ausgangssignal der Bandsperre für FM- und AM-Signale (16) ist.
